# EUROPÄISCHE PATENTSCHRIFT

(11) **EP 3 055 112 B1**
(45) Veröffentlichungstag und Bekanntmachung des Hinweises auf die Patenterteilung: **27.12.2017**
(21) Anmeldenummer: 14783831.2
(22) Anmeldetag: 10.10.2014
(51) Int. Cl.: B26D 3/16, B26D 1/58, B26D 1/60, B29C 47/00, B23D 21/04, B23D 25/02, B26D 5/08

(54) **ABLÄNGVORRICHTUNG FÜR EXTRUDIERTE KUNSTSTOFFPROFILE**
DEVICE FOR CUTTING EXTRUDED PLASTIC PROFILES
DISPOSITIF POUR LA COUPE DE PROFILES DE PLASTIQUE EXTRUDÉ

(30) Priorität: 12.10.2013 DE 102013220617
(43) Veröffentlichungstag der Anmeldung: 17.08.2016
(73) Patentinhaber: battenfeld-cincinnati Germany GmbH, 32547 Bad Oeynhausen (DE)
(72) Erfinder: DRÖGE, Jörg, 47647 Kerken (DE); VON HIPPEL, Christian, 47906 Kempen (DE)
(86) Internationale Anmeldenummer: PCT/EP2014/071806
(87) Internationale Veröffentlichungsnummer: WO 2015/052329

(56) Entgegenhaltungen:
- DE-A1-102007 053 476
- DE-U1- 20 104 200
- US-A- 4 430 913
- US-A- 5 609 081

## Beschreibung

Die Erfindung betrifft eine Vorrichtung zum Ablängen eines vorzugsweise dickwandigen extrudierten Rohres, mit mindestens einem Trennwerkzeug und einer Aufnahmeeinheit für das Trennwerkzeug, wobei das Trennwerkzeug radial zur Extrusionsachse verfahrbar ist und über weitere Mittel um das abzulängende Rohr herum rotierbar ist, um das Rohr abzulängen.

Zum Ablängen von extrudierten Rohren werden meist sogenannte fliegende Sägen eingesetzt, wobei ein kreisrundes Sägeblatt entweder von unten (Unterflursäge), von oben (Tauchsäge) oder von der Seite (Quersäge) an das zu sägende Rohr herangeführt wird, in den Querschnitt des Rohres eintaucht und im ersten Schritt die Wandstärke durchtrennt. Im zweiten Schritt wird das Sägeblatt um das Rohr herumgeführt, um das Rohr vollständig abzulängen. Hierbei wird das abzulängende Rohr während des Sägevorgangs eingespannt; der Sägeschlitten oder Sägewagen fährt dann synchron zum kontinuierlich weiterlaufenden Extrusionsvorgang mit der Extrusionsgeschwindigkeit mit ("fliegende Säge").

Werden Rohre gesägt, entstehen Sägespäne. Außerdem wird, bedingt durch die Reibung des Sägeblattes am Rohr, insbesondere bei einem Kunststoff-Rohr, eine statische Aufladung erzeugt. Dies hat den Nachteil, daß die Sägespäne am Rohr haften bleiben, was eine Verschmutzung zur Folge hat. Der entstehende Abfall muss oft als Sondermüll deklariert werden, was eine Wiederverwertung unmöglich macht.

Für kleine Rohre wird bereits eine Vorrichtung eingesetzt, bei der ein Ablängen spanlos erfolgt. Anstatt einer laufenden Säge wird ein rundes Messer so lange um das Rohr herumgeführt, bis die Rohrwandung durchtrennt ist.

Mit der letztgenannten, spanlosen Trennung wird es erreicht, kleine Rohrdurchmesser mit dünnem Querschnitt sauber zu trennen, jedoch war es bislang nicht möglich, erfolgreich auch dickwandige Rohre mit großem bis sehr großem Durchmesser - etwa 2m Durchmesser - abzulängen. Bei diesen Rohren wurde immer wieder auf das weiter oben beschriebene Sägen zurückgegriffen, was die bekannten Nachteile aufweist.

Versuche haben gezeigt, dass das Hauptproblem darin liegt, die Messer exakt durch das dickwandige Rohr zu führen. Durch die große Dicke und den großen Durchmesser wird bereits bei geringster Schrägstellung des Messers dieses im Material verkanntet, was ein Zerbrechen des Messers zur Folge hat.

Die Marktanforderung für derartige Trenneinheiten liegt in einer hohen Liniengeschwindigkeit bei kurzen Schnittlängen und der Möglichkeit, beispielsweise bei Kanalrohren aus PP/PVC eine Fase anzubringen. Es sind zwar Trennautomaten bekannt, die den Trennvorgang sehr schnell ausführen können, diese haben aber meist den Nachteil, dass diese dann nicht Fasen können oder nicht für jedes Kunststoffmaterial geeignet sind. Trennautomaten, mittels denen ein Fasen möglich ist, haben aber meist einen verhältnismäßig großen Sägewagen und sind daher langsam. Die somit benötigte Zeit für einen Schnitt ist sehr lang.

Bei den heutigen Maschinen wie Sägen (fliegende Säge) werden Rohre verschiedenster Durchmesser über einen um das Rohr laufenden Trennmesserarm bzw. Sägearm durchgetrennt. Alle hierzu benötigten Funktionen wie Arm vor-/zurückfahren, Rohr klemmen/lösen und die entsprechenden Stellungsrückmeldungen sind auf der um das Rohr rotierenden Scheibe angebracht. Hierzu werden für die elektrischen Signale Schleifringe benutzt. Die übliche Verfahrensweise ist, dass für jedes Signal eine eigene Schleifringspur zu benutzt wird. Durch die Baugröße bei kleineren Maschinen sowie die Kosten pro Schleifring werden die Signale und damit die zur Verfügung stehenden Funktionen beschränkt.

Eine Lösung der oben beschriebenen Probleme ist in der DE 20 104 200 beschrieben, bietet aber noch nicht zufriedenstellende Lösungen.

**Auch aus der** US 4,430,913 **ist eine Ablängvorrichtung bekannt, bei der über einen Zahnstangenkombination ein Trennwerkzeug radial bewegbar ist.**

Der Erfindung liegt daher die **Aufgabe** zugrunde, das bekannte Fachwissen einer gattungsgemäßen Trennvorrichtung, die mit einem Messer ausgestattet ist, derart weiterzuentwickeln, dass es möglich wird, einen reproduzierten Trennvorgang zu bewerkstelligen, wobei die Zustellung des Messers derart erfolgt, dass ein Verkanten ausgeschlossen wird und möglichst wenig Bauteile benötigt werden.

Die **Lösung** der Aufgabe ist in Verbindung mit dem Oberbegriff des Anspruches 1 dadurch gekennzeichnet, **dass der Block mit den Zahnstangen auf einer Aufnahmescheibe angeordnet ist, wobei die erste Zahnstange mit einem Ringelement in Verbindung steht, das auf einer Hülse entlang der Extrusionsachse hin und her bewegbar ist.**

Durch diese Ausgestaltung der Vorrichtung wird eine gleichmäßige geradlinige Bewegung sichergestellt. Die die axiale und radiale Bewegung der Trennvorrichtung entlang der Extrusionsachse sind so in einem Antrieb kombinierbar.

Weiterbildungsgemäß ist vorgesehen, dass der Antrieb der Zahnstangen mittels eines einzigen Axialantriebs erfolgt. Hierdurch wird sowohl Einbauplatz als auch Material eingespart, wodurch die gesamte Vorrichtung kleiner bauen kann.

Vorteilhafterweise sind die Zahnstangen im Block gekoppelt. Hierdurch wir erreicht, dass die Wegstrecke der ersten Zahnstange der Wegstrecke der zweiten Zahnstange entspricht. Die zurückgelegten Strecken der Zahlstangen sind absolut synchron. Nach entsprechender Justierung der Zahnstangen ist sichergestellt, dass die Eindringtiefe der Trennvorrichtung in die Außenwandung des Kunststoffprofiles bei allen am Umfang angeordneten Trennvorrichtungen weitgehend identisch ist. Unterschiede können nur noch aufgrund Toleranzen im Profilquerschnitt einhergehen.

Fortbildungsgemäß ist vorgesehen, dass das Trennwerkzeug ein Schneidmesser oder ein Werkzeug zum Fasen der Kanten ist. Je nach gewünschtem Einsatz, kann so entweder die Durchtrennung des Profilstranges oder die Anbringung einer Fase an der Stirnseite des Rohres erfolgen. Es ist auch denkbar ein Trennwerkzeug so zu gestalten, dass sowohl das Abtrennen und das Fasen umfasst sind.

In einer weiteren Fortbildung ist vorgesehen, dass der Block mit den Zahnstangen auf einer Aufnahmescheibe angeordnet ist, wobei die erste Zahnstange mit einem Ringelement in Verbindung steht, das auf einer Hülse entlang der Extrusionsachse hin und her bewegbar ist. Die Aufnahmescheibe wird mittels eines Antriebes um das extrudierte Rohr rotiert. An der Aufnahmescheibe können mehrere Einheiten des Blocks mit den Zahnstangen angeordnet sein, wodurch die erforderliche Rotation um das Profil und/oder die benötigte Zeit zum Trennen oder Fasen miniert wird.

In den Zeichnungen wird schematisch eine erfindungsgemäße Vorrichtung gezeigt:
- Fig. 1: zeigt eine typische Extrusionslinie
- Fig. 2: den Teil der Trennvorrichtung

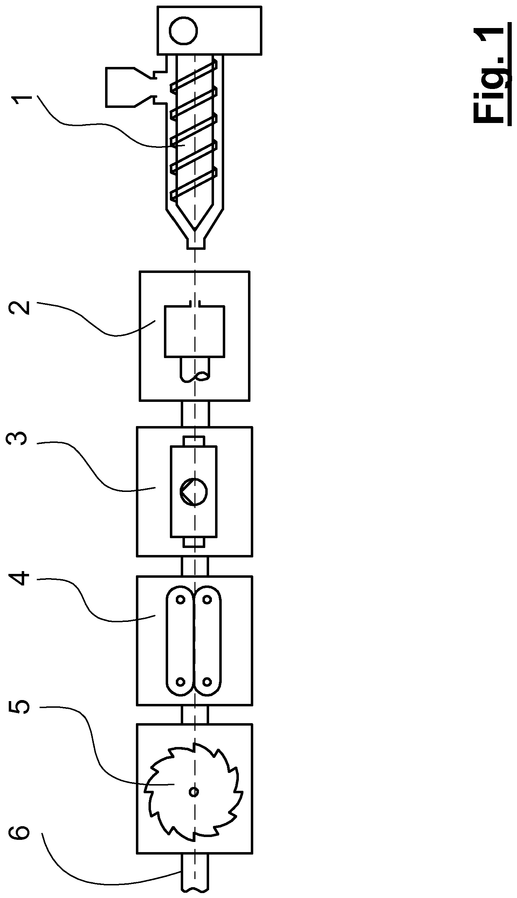

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet.

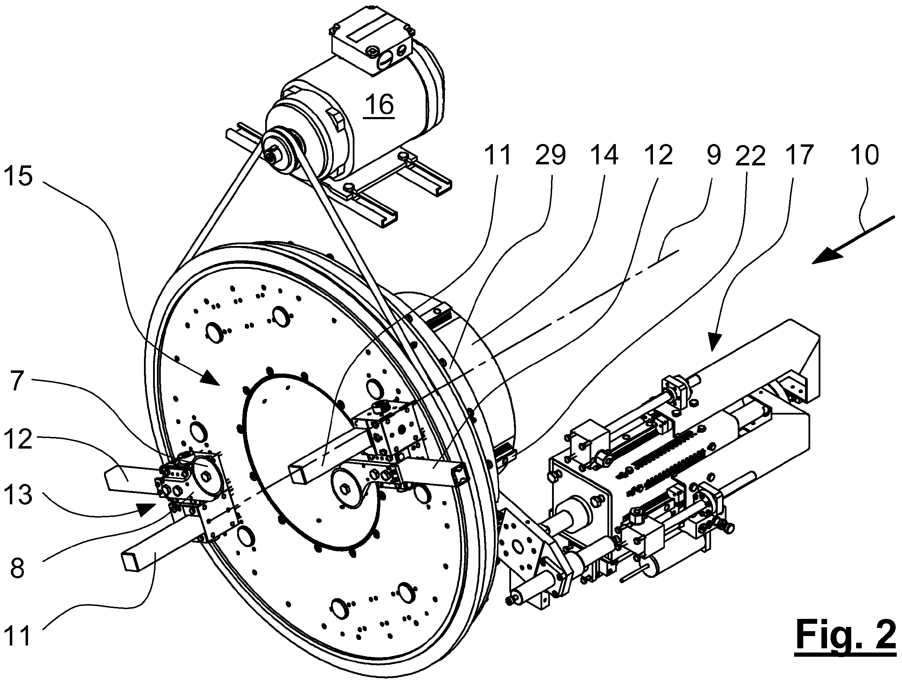

Figur 2 zeigt eine schematische Darstellung der erfindungsgemäßen Trennvorrichtung und entspricht der Position 5 gemäß der Darstellung in Figur 1. Das eigentliche Trennwerkzeug 7 ist an einer Aufnahmeeinheit 8 angeordnet, dieses kann geschraubt, geklemmt oder anderweitig befestigt sein. In der dargestellten Ausführungsform ist ein kreisrundes Schneidmesser eingesetzt. Es könnte aber auch ein Formwerkzeug sein mittels dem eine Fase angebracht werden kann. Die Aufnahmeeinheit 8 ist wiederum an einer zweiten Zahnstange 12 angeordnet die über einen Block 13 mit einer ersten Zahnstange 11 in Wirkverbindung steht. Der Block 13 ist an einer Aufnahmescheibe 15 angeordnet, die über den Rotationsantrieb 16 um die Extrusionsachse 9 rotierbar ist.

Mittels diese Axialantriebes 17 wir die Bewegung der beiden Zahnstangen 11, 12 über den Block 13 umgesetzt, sodass für die axiale und die radiale Bewegung der Trennmesser nur ein Antrieb erforderlich ist. Über die Kopplung im Block 13 wir die axiale in eine radiale Bewegung umgesetzt, die radiale Bewegung dient als Schnittbewegung für die Trennvorrichtung.

An der Aufnahmescheibe 15 können mehrere der Blöcke 13 mit den Zahlstangen angeordnet sein, beispielhaft sind hier nur zwei dargestellt, diese sind so angeordnet, dass ein gedachte gerade Verbindungslinie der beidem Mittelpunkte des Trennwerkzeuges 7 die Extrusionsachse 9 radial schneidet.

Weiterhin ist ein Ringelement 29 angeordnet das mit den ersten Zahnstangen 11 in Wirkverbindung steht und entlang der Linearführungen 22 auf der Hülse 14 hin und her bewegbar ist. Das Ringelement 29 ist äquidistant zur Hülse 14 und wird über den Axialantrieb 17 entlang der Extrusionsachse 9 verschoben. Das nicht dargestellte Rohr/Profil 6 wir in Extrusionsrichtung 10 bewegt.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Trennwerkzeug
- 8: Aufnahmeeinheit für 7
- 9: Extrusionsachse
- 10: Extrusionsrichtung
- 11: erste Zahnstange (parallel)
- 12: zweite Zahnstange (radial)
- 13: Block
- 14: Hülse
- 15: Aufnahmescheibe
- 16: Rotationsantrieb für 15
- 17: Axialantrieb für 29

- 22: Linearführung
- 29: Ringelement

## Patentansprüche

1. Vorrichtung zum Ablängen eines vorzugsweise dickwandigen extrudierten Rohres (6),
mit mindestens einem Trennwerkzeug (7) und
einer Aufnahmeeinheit (8) für das Trennwerkzeug (7)
wobei das Trennwerkzeug (7) radial zur Extrusionsachse (9) verfahrbar ist
und über weitere Mittel um das abzulängende Rohr (6) herum rotierbar ist, um das Rohr abzulängen,
**wobei** die Aufnahmeeinheit (8) zwei in einem Block (13) angeordnete Zahnstangen (11, 12) umfasst,
wobei die erste Zahnstange (11) axial und die zweite Zahnstange (12) radial zur Extrusionsachse (9) hin und her bewegbar ist,
die axiale Bewegung in eine radiale Bewegung umgesetzt wird und an der zweiten Zahnstange (12) das Trennwerkzeug (7) angeordnet ist,
**dadurch gekennzeichnet, dass**
**dass der Block (13) mit den Zahnstangen (11, 12) auf einer Aufnahmescheibe (15) angeordnet ist, wobei die erste Zahnstange (11) mit einem Ringelement (29) in Verbindung steht, das auf einer Hülse (14) entlang der Extrusionsachse (9) hin und her bewegbar ist.**

2. Vorrichtung nach Anspruch 1, **dadurch gekennzeichnet, dass** der Antrieb der Zahnstangen (11, 12) mittels eines einzigen Axialantriebs (17) erfolgt.

3. Vorrichtung nach Anspruch 2, **dadurch gekennzeichnet, dass** die Zahnstangen (11, 12) im Block (13) gekoppelt sind.

4. Vorrichtung nach Anspruch 3, **dadurch gekennzeichnet, dass** eine zurückgelegte Wegstrecke der ersten Zahnstange (11) einer zurückgelegten Wegstrecke der zweiten Zahnstange (12) entspricht.

5. Vorrichtung nach mindestens einem der vorigen Ansprüche, **dadurch gekennzeichnet, dass** das Trennwerkzeug (7) ein Schneidmesser ist.

6. Vorrichtung nach mindestens einem der vorigen Ansprüche, **dadurch gekennzeichnet, dass** das Trennwerkzeug (7) ein Werkzeug zum Fasen der Kanten ist.

7. Vorrichtung nach Anspruch 1, **dadurch gekennzeichnet, dass** auf der Aufnahmescheibe (15) mehrere Einheiten des Blocks (13) mit den Zahnstangen (11, 12) angeordnet sind.

## Claims

1. Apparatus for cutting a preferably thick-walled extruded pipe (6), comprising at least one separating tool (7) and
a receiving unit (8) for the separating tool (7),
the separating tool (7) being movable radially to the extrusion axis (9) and rotatable around the pipe to be cut (6) via further means
in order to cut the pipe (6),
the receiving unit (8) comprising two racks (11, 12) arranged in a block (13),
the first rack (11) being movable back and forth axially and the second rack (12) radially to the extrusion axis (9),
the axial movement being transformed into a radial movement,
and the separating tool (7) being arranged at the second rack (12),
**characterized in that**
the block (13) with the racks (11, 12) is arranged on a receiving dis, (15), the first rack (11) being connected to a ring element (29) which is movable back and forth on a sleeve (14) along the extrusion axis (9).

2. Apparatus according to claim 1, **characterized in that** the drive of the racks (11, 12) is realized by a single axial drive (17).

3. Apparatus according to claim 2, **characterized in that** the racks (11, 12) are coupled within the block (13).

4. Apparatus according to claim 3, **characterized in that** a distance covered by rack 1 (11) corresponds to a distance covered by rack 2 (12).

5. Apparatus according to at least one of the preceding claims, **characterized in that** the separating tool (7) is a cutting blade.

6. Apparatus according to at least one of the preceding claims, **characterized in that** the separating tool (7) is a tool for chamfering the edges.

7. Apparatus according to claim 1, **characterized in that** several units of the blocks (13) with the racks (11, 12) are arranged on the receiving disk (15).

## Revendications

1. Appareil pour le découpage d'un tube extrudé (6), de préférence aux parois épaisses, comprenant au moins un outil de séparation (7) et
une unité réceptrice (8) pour l'outil de séparation (7),
l'outil de séparation (7) pouvant être déplacé radialement par rapport à l'axe d'extrusion (9) et
tourné autour du tube à extruder (6) par d'autres moyens afin d'extruder le tube, l'unité réceptrice (8) comprenant deux crémaillères (11, 12) disposées dans un bloc (13),
la première crémaillère (11) étant déplaçable en va-et-vient de manière axiale par rapport à l'axe d'extrusion et la deuxième (12) de manière radiale par rapport à l'axe d'extrusion,
le mouvement axial étant transformé en mouvement radial et l'outil de séparation (7) étant disposé à la deuxième crémaillère (12),
**caractérisé en ce que**
le bloc (13) comprenant les crémaillères (11, 12) est disposé sur une disque réceptrice (15), la première crémaillère (11) communiquant avec un élément annulaire (29) qui est déplaçable en va-et-vient sur une douille (14) le long de l'axe d'extrusion (9).

2. Appareil selon la revendication 1, **caractérisé en ce que** le dispositif d'entraînement des crémaillères (11, 12) est réalisé par un seul dispositif d'entraînement axial.

3. Appareil selon la revendication 2, **caractérisé en ce que** les crémaillères (11, 12) sont couplées dans le bloc (13).

4. Appareil selon la revendication 3, **caractérisé en ce qu'**une distance parcourue par la première crémaillère (11) correspond à une distance parcourue par la deuxième crémaillère (12).

5. Appareil selon au moins une quelconque des revendications précédentes, **caractérisé en ce que** l'outil de séparation (7) est une lame de coupe.

6. Appareil selon au moins une quelconque des revendications précédentes, **caractérisé en ce que** l'outil de séparation (7) est un outil pour chanfreiner les chants.

7. Appareil selon la revendication 1, **caractérisé en ce que** plusieurs unités du bloc (13) comprenant les crémaillères (11, 12) sont disposées sur la disque réceptrice.
